# EUROPEAN PATENT APPLICATION

(11) **EP 1 974 637 A1**
(43) Date of publication of application: **01.10.2008**
(21) Application number: 07380085.6
(22) Date of filing: 30.03.2007
(51) Int. Cl.: A47J 27/00, A47J 27/04, A47J 27/086, A47J 37/06

(54) **Food cooking appliance**

(71) Applicant: Practical Technology, S.L., 46960 Aldaia, Valencia (ES)
(72) Inventor: Orts Lorente, Carlos, 46960 Aldaia Valencia (ES)
(74) Representative: Canadell-Isern, Roberto

(57) **Abstract**

Food cooking appliance, consisting of a circularly-shaped, nonstick container (2) that is highly resistant to abrasive elements, on the inside of which the food to be cooked is placed, so that some equidistant projections (3) have been provided at the top of this container (2) that contribute to the sealing and watertightness thereof. There are some coils (4, 5, 6) both at the top and bottom and on the sides that heat up the container (2) that contains the food in an integral, uniform way, thanks to the three sources of heat, thus generating very high temperatures that allow for different kinds of cooking. The upper coil (4) is attached to the container lid and the sides are formed in practice by a coil (5) that surrounds it.

## Description

### OBJECT

The object to which the invention protected by this Patent refers is a "Food cooking appliance", which can be used for different kinds of cooking (grilling, baking, steaming, etc.) and to easily and safely prepare numerous dishes in a very short time without the need for the user to be present.

### BACKGROUND

In the cooking appliances available to date, it suffices to put the ingredients in the container on the inside of the appliance and follow the instructions: select the desired program and the time required for cooking or, if the user so prefers, program the appliance by indicating the hour he/she wants the meal to be ready, so that the food will be prepared at the selected hour without the need to carry out complex operations.

The main drawback of these electrical appliances is that they can only simulate a few kinds of cooking, and also in their interior they only have one source of heat located at the bottom of the container on the inside. Therefore, there is a need for a cooking appliance that will eliminate all the drawbacks described above, so that the appliance can simulate different kinds of cooking (grilling, baking, steaming, etc.) and be used to easily and safely prepare numerous dishes in a very short time.

### DESCRIPTION OF THE INVENTION

The purpose of the invention that comprises the object of this Patent is to eliminate some functional drawbacks inherent in the above described object, and it has been designed and developed in keeping with this preeminent purpose.

The cooking appliance is an electrical appliance that consists of a casing with a specific design and in which all the elements required for it to function have been provided, e.g. language programmer, and programmers for selecting the different kinds of cooking, times and, in general, the different options of the appliance.

Inside this casing, a circularly-shaped, nonstick container that is highly resistant to abrasive elements has been provided. The food to be cooked is placed inside this container. This container incorporates some equidistant projections at the top that contribute to the sealing and watertightness thereof.

In the cavity where the container is located - on its sides and on the lid - some coils have been provided that allow for overall heating of the appliance, so that the food is cooked in an integral, uniform way thanks to the three sources of heat. In this way, the appliance can generate higher temperatures and thus can cook in different ways. At the same time, two sensors have been provided in the cavity, one of them located at the bottom which detects the proper positioning of the container. The other sensor detects the amount of food to be cooked, since the appliance will take more or less time to heat up depending on this amount, but the cooking time will always be the same.

A suitable circular material joint has been incorporated into the lid of the cooking appliance to provide complete watertightness and to prevent an improper positioning of the container by the user. Thanks to the watertightness provided by the circular joint, the flavor of the foods are much enhanced, and moreover they are cooked homogeneously because the pressure and temperature are constant.

Of note is the fact that the cooking appliance is very easy to clean, as the container is nonstick and therefore the food does not stick to it. Moreover, only the container and the lid have to be cleaned thanks to the watertight joint, since no food residue can leak to the exterior.

### BRIEF DESCRIPTION OF THE DRAWINGS

To complement the description of the invention and to facilitate interpretation of the structural and functional features of its object, drawings are attached hereto that schematically show a preferential execution of the food cooking appliance that comprises the object of this Patent. In these drawings:

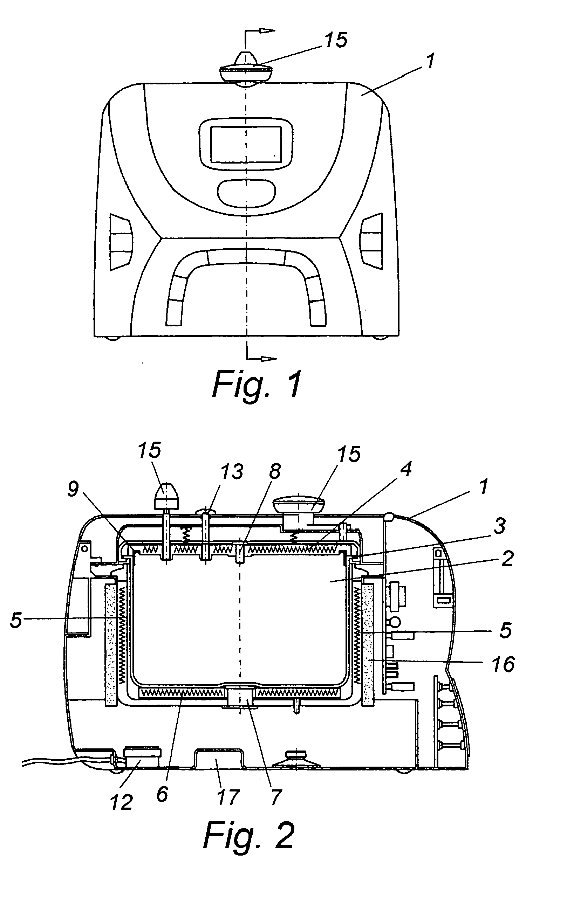

- Figure 1 shows a front view of the food cooking appliance.
- Figure 2 shows a cross section of the cooking appliance.

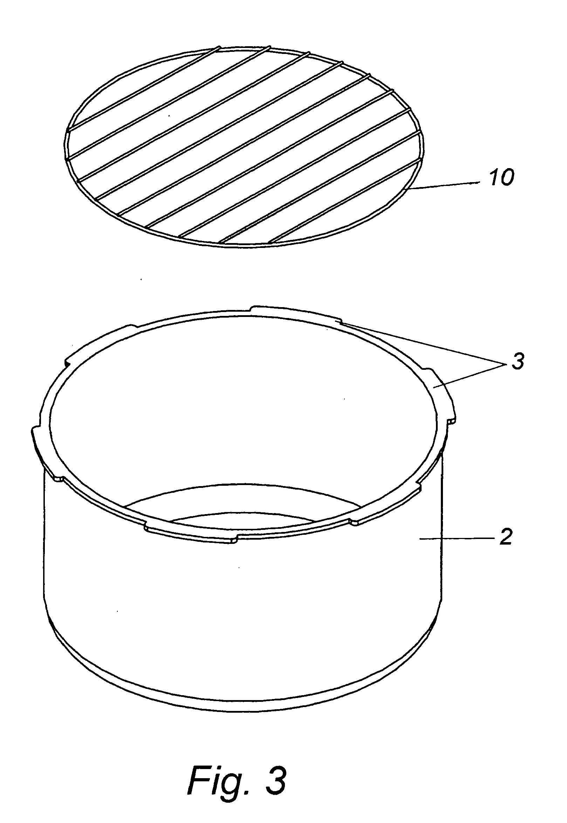

- Figure 3 shows a detail of the container and the metal grill that is used in the event that the user uses the appliance as an oven.

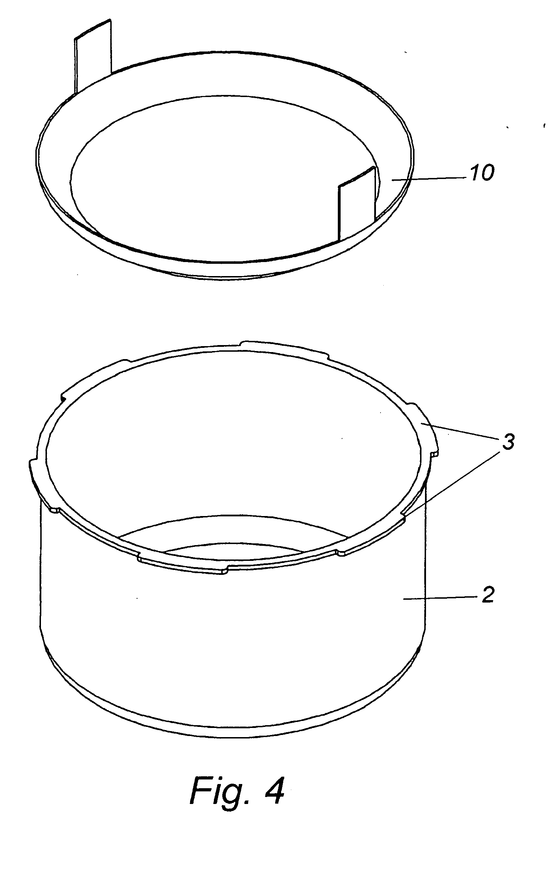

- Figure 4 shows another detail of the container with another of the accessories that complete the food cooking appliance.

### DESCRIPTION OF A PREFERRED EMBODIMENT

To clearly show the nature and scope of the advantageous application of the food cooking appliance that comprises the object of the claimed invention, following is a description of its structure with reference to the drawings which, because they represent a preferential execution of this object on an informative basis, should be considered in the broadest sense of the word and not as limitative of the application and the content of the claimed invention.

The cooking appliance is an electrical appliance that consists of a casing (1) with a specific design and in which all the elements required for it to function have been provided. Inside this casing (1), a circularly-shaped, nonstick container (2) that is highly resistant to abrasive elements has been provided. The food to be cooked is placed inside this container. This container (2) incorporates some equidistant projections (3) at the top that contribute to the sealing and watertightness thereof.

In the cavity where the container (2) is located - on its sides and on the lid - some coils (4, 5, 6) have been provided that allow for overall heating of the appliance, so that the food is cooked in an integral, uniform way thanks to the three sources of heat. In this way, the appliance can generate higher temperatures and thus can cook in different ways. At the same time, a sensor (7) has been provided in this cavity, located at the bottom, which detects the proper positioning of the container (2). Another sensor (8) detects the amount of food to be cooked, since the appliance will take more or less time to heat up depending on this amount, but the cooking time will always be the same.

A suitable circular material joint (9) has been incorporated into the lid of the cooking appliance to provide complete watertightness and to prevent an improper positioning of the container (2) by the user. Thanks to the watertightness provided by the circular joint (9), the flavor of the foods are much enhanced, and moreover they are cooked homogeneously because the pressure and temperature are constant.

To complete the invention, a series of accessories have been included, such as a metal grill (10) and a tray (11) for steam cooking, which are required depending on the mode in which the user wants to use the cooking appliance because, as described above, this appliance can be used for different kinds of cooking. In addition, the cooking appliance contains elements common to this type of appliance, some of which are essential for operation, e.g. the plug (12), a pressure valve (13) and another steam vent valve (14), the corresponding operating control (15) to open and close the appliance lid, and an insulator (16) to protect the electrical components. In addition, this appliance incorporates a loudspeaker (17), since it gives instructions via messages and voice to guide the user at all times according to the selected recipe to be cooked.

## Claims

1. "Food cooking appliance", comprising a casing on the inside of which there is a container to cook the food, with its corresponding steam vent and pressure valves and open and close operating control, **characterized by** the fact that it consists of a circularly-shaped, nonstick container (2) that is highly resistant to abrasive elements, on the inside of which the food to be cooked is placed, and that some equidistant projections (3) have been provided at the top of this container (2) that contribute to the sealing and watertightness thereof; that some coils (4, 5, 6) have been provided both at the top and bottom and on the sides that heat up the container (2) that contains the food in an integral, uniform way, thanks to the three sources of heat, thus generating very high temperatures that allow for different kinds of cooking; the upper coil (4) is attached to the container lid and the sides are formed in practice by a coil (5) that surrounds it .

2. "Food cooking appliance", according to claim 1, **characterized by** the fact that a sensor (7) has been provided at the bottom of the cavity where the container (2) is located, which detects the proper positioning of the container and measures its temperature, and another sensor (8) is provided that detects the amount of food to be cooked.
